(19) Europäisches Patentamt
European Patent Office
Office européen des brevets

(11) **EP 1 510 604 B1**

(12) **EUROPEAN PATENT SPECIFICATION**

(45) Date of publication and mention
of the grant of the patent:
**11.03.2009 Bulletin 2009/11**

(51) Int Cl.:
*D01F 6/62* (2006.01)        *D02G 3/48* (2006.01)
*B60C 9/00* (2006.01)

(21) Application number: **03029112.4**

(22) Date of filing: **17.12.2003**

(54) **High tenacity polyethylene-2,6-naphthalate fibers**

Polyethylennaphthal-Fasern mit hoher Festigkeit

Fibres de polyéthylène naphthalate à haute tenacité

(84) Designated Contracting States:
**AT BE BG CH CY CZ DE DK EE ES FI FR GB GR HU IE IT LI LU MC NL PT RO SE SI SK TR**

(30) Priority: **22.08.2003 KR 2003058347
22.08.2003 KR 2003058348**

(43) Date of publication of application:
**02.03.2005 Bulletin 2005/09**

(73) Proprietor: **Hyosung Corporation
431-080 Kyonggi-do (KR)**

(72) Inventors:
• **Kwon, Ik-Hyeon
Yongdeungpo-ku
150-043 Seoul (KR)**
• **Bang, Yun-Hyuk
Suwon
440-320 Kyonggi-do (KR)**
• **Lee, Jong
157-798 Seoul
Mauritania (KR)**
• **Lee, Deuk-Jin
142-883 Seoul (KR)**
• **Lee, In-Ho
Seoul 121-080 (KR)**

(74) Representative: **Beier, Ralph
v. Bezold & Partner
Patentanwälte
Akademiestrasse 7
80799 München (DE)**

(56) References cited:
**WO-A-93/14252            US-A- 3 929 180
US-B1- 6 511 747**

**Description**

**Technical Field**

The present invention relates to a high strength polyethylene-2,6-naphthalate yarn produced by a method comprising controlling the stress-strain curve and fine structure of an undrawn yarn such that the drawability of the undrawn yarn in a drawing step is improved. The industrial yarn produced by the present invention provides a treated cord having improved dimensional stability and high strength.

Moreover, the present invention provides a dipped cord for tire cords, which is characterized by having the following physical properties and by showing a stress-strain curve wherein the undrawn yarn is elongated by less than 2% and has an initial modulus of 50-250 g/d, when subjected to an initial stress of 1.0 g/d, and it is elongated by at most 15% when subjected to a stress greater than the initial stress but smaller than 6.0 g/d: (1) a tenacity of at least 6.5 g/d, (2) an elongation of at least 6%, (3) an adhesion with rubber of at least 10 kg, (4) a fatigue resistance of at least 90%, and (5) 2,000-8,000 denier.

Furthermore, the present invention provides a high performance radial tire whose carcass ply contains this dipped cord.

**Background Art**

Polyethylene-2,6-naphthalates have higher glass transition temperature, crystallization temperature, melting temperature and melting viscosity, than polyethylene terephthalates, due to their bulky naphthalate units. Thus, to enhance their spinnability upon spinning, i.e., to reduce the melting viscosity of their melt upon spinning, they have been spun at a temperature higher than the spinning temperature (310 to 320 ˚C) of polyethylene terephthalates.

However, since the spinning at high temperature causes the thermal decomposition of the melt, resulting in a deterioration in drawing workability of the melt and a significant reduction in intrinsic viscosity of the melt, it is difficult to produce a high strength yarn from polyethylene-2,6-naphthalat (see, Japanese patent laid-open publication Nos. Sho 72-35318, 73-64222 and 75-16739).

Japanese Patent No. 2945130 describes a method of producing polyethylene-2,6-naphthalate fibers with high strength and modulus by controlling the spinning speed and spinning draft ratio and changing the drawing temperature, instead of increasing the spinning temperature. In this method, however, it is difficult to achieve uniform spinning, and also it is difficult to perform normal drawing because the temperature of first-stage drawing is higher than 150 ˚C and thus yarn width is increased.

It is generally well known in the production field of industrial polyethylene-2,6-naphthalate yarns that at high intrinsic viscosity (I.V.), preferably an intrinsic viscosity (I.V.) of 0.8-1.2, and a low spinning speed of 200-1,000 m/min, the improvement of tenacity of yarns resulting from high drawing ratio can be achieved only when the uniformity in fineness and orientation between undrawn yarn filaments is increased.

In a theoretical consideration on this fact, the tenacity of a final drawn yarn can be increased only when spinning tensile is increased in the production of an industrial polyester yarn, such that orientation of an undrawn yarn and formation of tie chains connecting crystals with each other. To obtain a drawn yarn having a more increased tenacity, it is necessary to ensure the fine structure of an undrawn yarn which can be drawn at high draw ratio.

**Disclosure of Invention**

From this viewpoint, the present invention comprises controlling the stress-strain curve and fine structure of an undrawn yarn such that the drawability of the undrawn yarn in a drawing step can be increased.

Therefore, the present invention relates to a high strength polyethylene naphthalate yarn produced by a method comprising controlling the stress-strain curve and fine structure of an undrawn yarn to increase the drawability of the undrawn yarn in a drawing step, and an object of the present invention is to provide a high strength polyethylene-2,6-naphthalate yarn with excellent physical properties, which is produced by a method wherein the drawability of an undrawn yarn in a drawing step is maximized by withdrawing the undrawn yarn in such a speed that the undrawn yarn has a birefringence of 0.001-0.015 and shows a stress-strain curve wherein the undrawn yarn is elongated by less than 10% and has an initial modulus of 10-50 g/d, when subjected to an initial stress of 0.3 g/d, and it is elongated by at least 200%, when subjected to a stress greater than the initial stress but smaller than 1.0 g/d.

Another object of the present invention is to provide a high strength polyethylene naphthalate yarn useful for the production of tire cords having excellent dimensional stability and high strength.

The present invention provides a producing method of an industrial polyethylene-2,6-naphthalate multifilament yarn, which comprises the steps of: (A) extruding a polymer at a temperature of 290-330 ˚C to form a molten spun yarn, the polymer containing more than 85 mol% of ethylene terephthalate units and having an intrinsic viscosity of 0.80-1.2;

(B) passing the molten spun yarn through a retarded cooling zone and then quenching and solidifying the spun yarn; (C) withdrawing the solidified yarn in such a speed that the undrawn yarn has a birefringence of 0.001-0.015 and shows a stress-strain curve wherein the undrawn yarn is elongated by less than 10% and has an initial modulus of 10-50 g/d, when subjected to an initial stress of 0.3 g/d, and it is elongated by at least 200% subjected to a stress greater than the initial stress but smaller than 1.0 g/d; (D) subjecting the withdrawn yarn to multi-stage drawing at a total draw ratio of 4.0.

The polyethylene-2,6-naphthalate polymer which is used in the present invention contains at least 85 mol% of ethylene-2,6-naphthalate units. Preferably, the polyethylene-2,6-naphthalate polymer is composed essentially of polyethylene-2,6-naphthalate units.

Alternatively, the polyethylene-2,6-naphthalate may incorporate, as copolymer units, minor amounts of units derived from one or more ester-forming ingredients other than ethylene glycol and 2,6-naphthalene dicarboxylic acid or its derivatives. Examples of other ester-forming ingredients which may be copolymerized with the polyethylene terephthalate units include glycols such as 1,3-propanediol, 1,4-butanediol and 1,6-hexanediol, etc., and dicarboxylic acids such as terephthalic acid, isophthalic acid, hexahydroterephthalic acid, stilbene dicarboxylic acid, bibenzoic acid, adipic acid, sebacic acid and azelaic acid, etc.

The polyethylene naphthalate chip which is used in the present invention may be preferably prepared by melt-mixing naphthalene-2,6-dimethylcarboxylate (NDC) with ethylene glycol in a weight ratio ranging from 1.6 to 2.3 at 190 ˚C, and subjecting the molten mixture to transesterification at 190-240 ˚C for about 2-3 hours and polycondensation at 280-300 ˚C for about 2-3 hours to form a raw chip having an intrinsic viscosity of about 0.42-0.70, and then subjecting the raw chip to solid state polymerization at a temperature of 225-260 ˚C in vacuum in such a manner as to have an intrinsic viscosity of 0.80-1.20 and a moisture content of less than 30 ppm.

In the transesterification, the ester-interchange catalyst, such as manganese acetate, calcium acetate, magnesium acetate, cobaltous acetate, and the like, may be added as a catalyst in such an amount that the amount of manganese metal remaining in the final polymer is in the range of 30 to 70 ppm. When the amount of the remaining manganese metal is less than 30 ppm, the reaction rate becomes too slow, while if the amount is more than 70 ppm, the excessive amount of manganese metal acts as a foreign substance to induces undesirable effects in solid state polymerization and spinning.

In the polycondensation, the polymerization catalyst, such as antimony acetate, antimony trioxide, titanium alkoxides, germanium dioxide, stannous alkoxides, and the like, may be added as a polymerization catalyst in such an amount that the amount of antimony metal remaining in the final polymer is in the range of 150 to 300 ppm. When the amount of the remaining antimony metal is less than 150 ppm, the polymerization rate becomes slow to cause in a reduction in polymerization efficiency, while if the amount is more than 300 ppm, the excessive amount of antimony metal acts as a foreign substance to induce undesirable problems during spinning and drawing. In addition, a phosphorus-based thermal stabilizer, like phosphorous compound, such as phosphoric acid, trimethyl phosphate, triethyl phosphate, trinonyl phosphate, trimethyl phosphonoacetate, and the like, may be added in such an amount that the amount of phosphorus element remaining in the final polymer is in the range of 35 to 45 ppm, and that the manganese/phosphorus content ratio is less than 2.0. If the manganese/phosphorus content ratio is more than 2.0, excessive oxidation occurs during solid state polymerization, giving a spun yarn having poor properties.

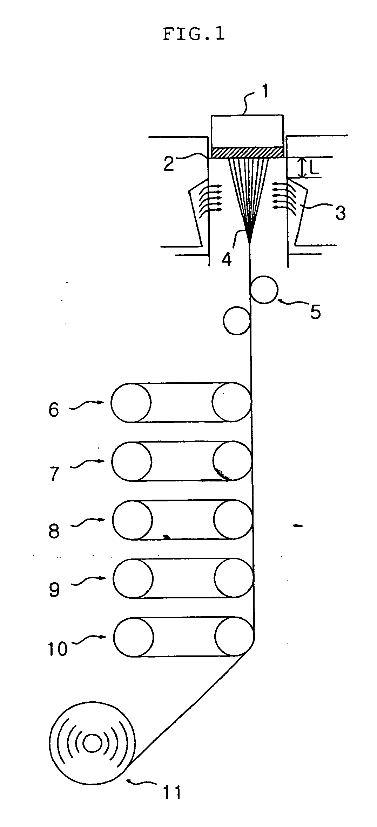

The polyethylene naphthalate chip thus obtained is spun into a yarn according to the method of the present invention. FIG. 1 schematically shows a producing process of a polyethylene naphthalate yarn according to one preferred embodiment of the present invention.

In the step (A) of the inventive method for the production of the polyethylene naphthalate yarn, the polyethylene naphthalate chip is melt-spun through a pack 1 and nozzles 2 at a spinning draft ratio (the linear velocity on a first withdrawing roller/the linear velocity in the nozzles) of 20-200 at a relatively low temperature of 290-320 ˚C in order to prevent its viscosity decrease caused by thermal decomposition and hydrolysis. If the spinning draft ratio is below 20, the uniformity of the filament cross-section will be reduced to remarkably deteriorate the drawing workability of the polymer, whereas if it exceeds 200, filament breakage occurs during spinning, making it difficult to produce a normal yarn.

In the step (B), the molten spun yarn 4 formed in the step (A) is quenched by passing it through a cooling zone 3. If necessary, a heating unit may be disposed over a section (i.e., hood length L) from just below the nozzles 2 to the start point of the cooling zone 3.

This section is called the retarded cooling zone or the heating zone, and has a 50 to 250 mm length and is maintained at a temperature of 250 to 400 ˚C.

In the cooling zone 3, a quenching method which is selected from open quenching, circular closed quenching, radial outflow quenching and the like depending on a blowing method of cooling air can be applied. Then, the solidified yarn 4 from the cooling zone 3 may be oiled to 0.5-1.0% by an oil-feeding unit 5.

In the step (C), the undrawn yarn is withdrawn in such a speed that the undrawn yarn has a birefringence of 0.001-0.015 and shows a stress-strain curve wherein, at an initial stress of 0.3 g/d, the undrawn yarn is elongated by less than 10% and has an initial modulus of 10-50 g/d, and at a stress greater than the initial stress but smaller than 1.0 g/d, it is elongated by at least 200%. A preferred speed at which the undrawn yarn is withdrawn is 200-1,000 m/minute.

In the present invention, the stress-strain curve and birefringence of the undrawn yarn are used as factors of controlling the fine structure of the undrawn yarn.

Particularly, the present invention is characterized in that the undrawn yarn shows a stress-strain curve wherein the undrawn yarn is elongated by less than 10% and has an initial modulus of 10-50 g/d when subjected to an initial stress of 0.3 g/d, and it is elongated by at least 200% when subjected to a stress greater than the initial stress but smaller than 1.0 g/d.

The undrawn yarn having such a stress-strain curve can show maximized drawability in a subsequent drawing process.

Moreover, in the present invention, the birefringence of the undrawn yarn is used as a factor of controlling the fine structure of the undrawn yarn together with this stress-strain curve.

Particularly, in the present invention, the stress-strain curve and birefringence of the undrawn yarn must satisfy the range as described above such that the excellent drawability of the undrawn yarn in a drawing process can be ensured. If the birefringence of the undrawn yarn is lower than 0.001, the crystallization speed of the undrawn yarn becomes too slow in the drawing step so that the sufficient formation of tie chains between crystals cannot be induced. If the birefringence is higher than 0.015, the crystallization speed becomes too fast in the drawing process to lower the drawability of the undrawn yarn, making it difficult to produce a high strength yarn.

In the step (D) of the inventive method, the yarn passed through the first drawing roller 6 is passed through a series of drawing rollers 7, 8, 9 and 10 by a multi-stage drawing process so that it is drawn to a total draw ratio of at least 4.0, and preferably 4.5-6.5, to form a final drawn yarn 11.

Making the interval between the nozzle unit and the upper end of the cooling zone as narrow as possible in spinning is advantageous in obtaining a final drawn yarn having high strength. However, either if the interval between the lower end of the nozzle unit and the lower end of the heating unit is shorter than 50 mm (substantially 100 mm since about 50 mm-long spinning block is disposed just below the nozzle unit and a 50 mm-long heating unit is used), or the interval between the lower end of the heating unit and the upper end of the cooling unit is out of a range of 50 to 150 mm, a significant non-uniformity in the undrawn yarn will occur to make it impossible to obtain a drawn yarn having sufficient physical properties.

The drawn polyethylene naphthalate yarn produced by the inventive method has an intrinsic viscosity of 0.60-0.90, a tenacity of at least 8.5 g/d, an elongation of at least 6.0%, a birefringence of at least 0.35, a density of 1.355-1.375, a melting point of 270-285 ˚C, and a shrinkage of 1-4%.

In the present invention, the high strength polyethylene fiber meeting the above-described physical properties is twisted with a twisting machine to form a raw cord, and then, woven and dipped in a dipping solution, thereby giving a dipped polyethylene naphthalate cord.

Hereinafter, twisting, weaving and dipping processes according to the present invention will be described in further detail.

In a more detailed description of the twisting process of the present invention, the drawn polyethylene naphthalate yarn produced by the method as described above is twisted with a direct twisting machine where false-twist and ply-twist are conducted at the same time. This gives a raw cord for tire cords. This raw cord is produced by plying and cabling two strands of the polyethylene naphthalate yarn for tire cords, in which the plying and cabling generally have the same twist number, or if necessary, different twist numbers.

An important result in the present invention is that the strength and elongation, elongation at load and fatigue resistance, etc. of a cord depend on the twist number of the polyethylene terephthalate yarn. Generally, as the number of twists is increased, the tenacity of the cord is decreased and the elongation at load and elongation at break of the cord are increased. The fatigue resistance of the cord shows a tendency to increase as the twist number is increased. In the present invention, the polyethylene naphthalate tire cord is produced to a twist number of 250 (cabling)/250 (plying) TPM to 500 (cabling)/500 (plying) TPM. The reason why the cabling and plying have the same twist number is because the resulting tire cord is easily maintained at a linear shape to exhibit its physical properties at the maximum, without showing revolutions or twists. If the twist number is smaller than 250/250 TPM, the elongation at break of the raw cord can be reduced, resulting in a decrease in its fatigue resistance, whereas if the twist number is higher than 500/500 TPM, a great reduction in tenacity of the raw cord will occur, making it unsuitable for tire cords.

In the present invention, the cabling and plying may also be performed to different twist numbers, if necessary. In this case, a raw cord is produced in such a manner that the cabling is performed to a twist number of 350-500 TPM, and the plying, at 300-500 TMP. The reason why the cabling and plying are performed to different twist numbers is because, within a range of physical properties, the lower the twist number, the lower the twisting costs, resulting in economic advantages. As a constant of evaluating such a twist, there is proposed a twist constant in the relevant field of the art.

The raw cord produced is woven with a weaving machine, and the resulting woven fabric is dipped in a dipping solution and cured. This gives a dipped cord for tire cords having a resin layer attached to the surface of the raw cord.

In a more detailed description of the dipping process of the present invention, dipping is accomplished by impregnating the surface of the yarn with a resin layer, called resorcinol-formaline-latex (RFL). This dipping is carried out in order to overcome the intrinsic shortcoming of the insufficient adhesion to rubber of a yarn for tire cords. A conventional rayon fiber or nylon is subjected to a one-bath dipping, but in the case of a PET fiber, its surface is first activated and then treated with adhesives (two-bath dipping), since the reactive groups of the PET fiber are smaller than the rayon or nylon fiber. The polyethylene naphthalate yarn is subjected to the two-bath dipping using a dipping bath known for tire cords.

The dipped cord produced by the above method has the following physical properties, and shows a stress-strain curve wherein the cord is elongated by less than 2% and has an initial modulus of 50-250 g/d, when subjected to an initial stress of 1.0 g/d, and it is elongated by at most 15% when subjected to a stress greater than the initial stress but lower than 6.0 g/d: (1) a tenacity of at least 6.5 g/d, (2) an elongation of at least 6%, (3) an adhesion with rubber of at least 10 kg, (4) a fatigue resistance of at least 90%, (5) a total denier of 2,000-8,000, (6) a twist constant of 0.50-0.85, and (7) $E^{2.25}$ (elongation at 2.25 g/dl) + FS (free shrinkage) of less than 5.5%.

In another aspect, the present invention provides a pneumatic radial tire having improved dimensional stability and fatigue resistance and an aspect ratio of less than 0.65, in which a carcass ply of the tire comprises the dipped cord produced by the method as described above and having excellent physical properties at high temperature, improved dimensional stability and high strength, the dipped cord showing a stress-strain curve wherein the cord is elongated by less than 2% and has an initial modulus of 50-250 g/d when subjected to an initial stress of 1.0 g/d, and is elongated by at most 15% when subjected to a stress greater than the initial stress but lower than 6.0 g/d.

Particularly, according to the present invention, the dipped polyethylene naphthalate cord which is used in the carcass ply must have an elongation of less than 2% at a stress of less than 1.0 g/d. If the elongation is higher than 2%, a remarkable reduction in handing stability resulting from the severe deformation of the carcass layer will be caused. Furthermore, the dipped cord according to the present invention must show a stress-strain curve wherein the dipped cord is elongated by at most 15% when subjected to a stress greater than 1.0 g/d but smaller than 6.0 g/d. If this elongation is higher than 15%, the deformation of the carcass will be easily caused, leading to a reduction in inner pressure resistance of the carcass as a pressure container.

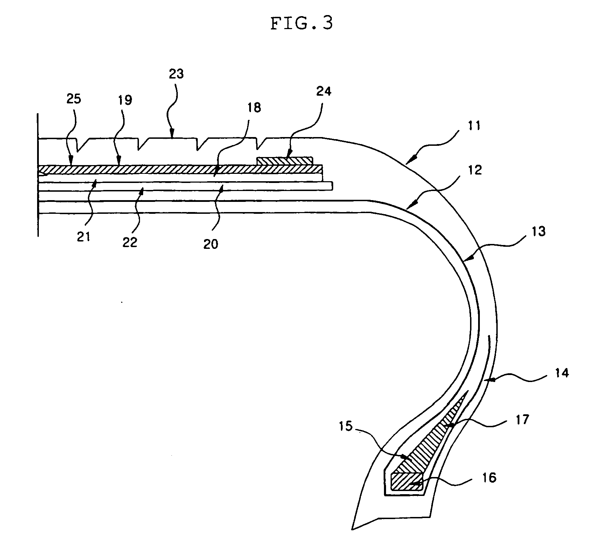

Concretely, a tire as shown in FIG. 3 is produced. More concretely, a carcass cord 13 made of the dipped polyethylene naphthalate cord produced by the present invention has a total denier of 2,000d-8,000d. A carcass ply 12 comprises at least one layer of the tire cord 13 for carcass ply reinforcement. The reinforcement density of the dipped cord in the carcass ply is preferably 15-35 EPI. If the reinforcement density is lower than 15 EPI, the mechanical properties of the carcass ply will be lowered rapidly, whereas if it exceeds 35 EPI, disadvantages with respect to economic efficiency will be caused.

The carcass ply 12 with a ply turn-up 14 comprises carcass cords, preferably in one or two layers. The carcass cord 13 for reinforcement is oriented at an angle of 85-90˚ with respect to the circumferential direction of a tire 11. In the shown embodiment, the reinforcing carcass cord 13 is oriented at an angle of 90˚ with respect to the circumferential direction of the tire. The ply turn-up 14 preferably has a width of about 40-80% relative to the maximum section width of the tire. If the ply turn-up has a width of less than 40% relative to the maximum section width, its effect of supplementing the rigidity of tire sidewalls will be excessively reduced, whereas if is higher than 80%, an excessive increase in rigidity of the tire sidewalls will be caused, resulting in an adverse effect on ride comfort.

Hereinafter, the tire shown in FIG. 3 will be described in more detail.

A bead region 15 of the tire 11 has a non-expandable annular bead core 16. This bead core is preferably made of a continuously wound single-filament steel wire. In a preferred embodiment, a high-strength steel wire with a diameter of 0.95-1.00 mm is formed into a 4x4 structure or a 4x5 structure.

In a preferred embodiment of the present invention, the bead region has a bead filler 17. The bead filler needs to have a hardness higher than a certain level, and preferably a shore A hardness of 40.

In the present invention, the tire 11 is reinforced with a structure of a belt 18 and a cap ply 19 at its crown portion. The belt structure 18 comprises two cut belt plies 20. A cord 21 of the belt plies 20 is oriented at about 20˚ with respect to the circumferential direction of the tire. The cord 21 of the belt plies is disposed in the opposite direction to a cord 22 of another ply. However, the belt 18 may comprise an optional number of plies, and preferably can be disposed at an angle range of 16-24˚. The belt 18 acts to provide lateral rigidity so as to minimize the rising of a tread 23 from the road surface during the running of the tire. The cords 21 and 22 of the belt 18 are made of steel cords in a 2+2 structure, but may also have other structures. The upper portion of the belt 18 is reinforced with a cap ply 21 and an edge ply 24. A cap ply cord 25 within the cap ply 19 is disposed in the parallel direction to the circumferential direction of the tire and serves to inhibit a change in size by high-speed running of the tire. Also the cap ply cord 25 is made of a material having high shrinkage stress at high temperature. Although one layer of the cap ply 19 and one layer of the edge ply 21 may be used, one or two layer of the cap ply and one or two layers of the edge ply are preferably used.

Moreover, the drawn yarn produced by the present invention can be converted into a treated cord by a conventional method.

For example, two strands of the drawn yarn with a 1,500 denier are plied and cabled to 390 TPM (the standard twist number of a general polyethylene-2,6-naphthalate treated cord) to form a cord yarn. Then, the cord yarn is dipped with adhesive solution (isocynate + epoxy or PCP resin + REL (resorcinol-formaline-latex)) in a first dipping tank, and then, dried and stretched in a drying zone at a temperature of 130-180 °C for 150-200 seconds at a stretch ratio of 1.0-4.0%. Then, the dried cord is stretched and heat-set in a hot stretching zone at a temperature of 200-245 °C for 45-80 seconds at a stretch ratio of 0-6.0%. Next, the resulting cord is dipped with adhesive solution (RFL) in a second dipping tank, followed by drying at a temperature of 120-180 °C for 90-120 seconds. The dried cord is heat-set at a temperature of 200-245 °C and a stretch ratio of -4.0 to 4.0%, thereby producing a dipped cord.

The treated cord (1500 denier, two strands twisted to 390 TPM) has a good dimensional stability, represented by the sum of $E^{2.25}$ (elongation at 2.25 g/d load) and FS (free shrinkage) being less than 5.5%, and a tenacity of at least 6.8 g/d.

As described above, the treated cord produced using the polyethylene-2,6-naphthalate fiber with high modulus and low shrinkage has improved dimensional stability and high strength, and thus, can be advantageously employed as a fibrous reinforcement material of rubber products such as tires and industrial belts, and other industrial applications.

**Brief Description of Drawings**

FIG. 1 schematically illustrates a process for the production of a polyethylene-2,6-naphthalate fiber according to the present;

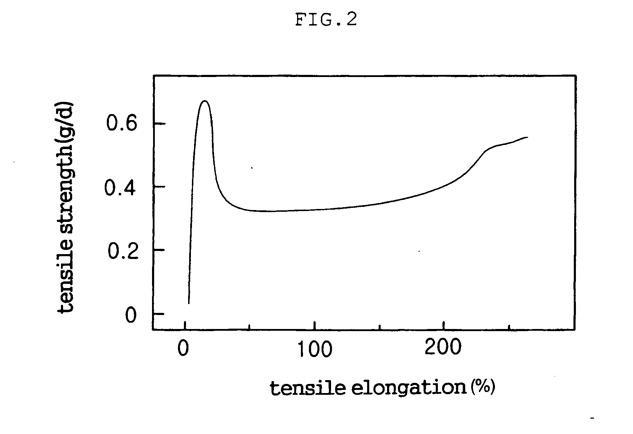

FIG. 2 shows a stress-strain curve of an undrawn yarn formed in the present invention; and
FIG. 3 schematically shows the structure of an automobile tire comprising high strength polyethylene naphthalate dipped tire according to the present invention.

| | | | |
|---|---|---|---|
| 11: | tire | 12: | carcass layer |
| 13: | carcass layer-reinforcing cord | 14: | ply turn-up |
| 15: | bead region | 16: | bead core |
| 17: | bead filler | 18: | belt structure |
| 19: | cap ply | 20: | belt ply |
| 21, | 22: belt cord | 23: | tread |
| 24: | edge ply | 25: | cap ply cord |

**Best Mode for Carrying Out the Invention**

The following Examples are given for the purpose of illustration only, and are not intended to limit the scope of the invention. In the Examples and Comparative Examples, the characteristics of the yarns and treated cords produced were evaluated in accordance with the following methods.

(1) Intrinsic Viscosity(I.V.)

0.1g of a sample was dissolved in a mixture of phenol and 1,1,2,3-tetrachloroehane(60/40 by weight) to a concentration of 0.4g/100ml. The solution was put in Ubbelohde viscometer and kept in a 30°C water bath for 10 minutes. The flow time of the solution as well as that of the solvent were measured and RV and IV values were calculated based on the following formulae:

$$R.V. = \text{flow time of the solution/flow time of the solvent} \quad \text{---(1)}$$

$$I.V. = 1/4 \times (R.V. - 1)/C + 3/4 \times (\ln R.V./C) \quad \text{---(2)}$$

Wherein, C is the sample concentration(g/100ml).

(2) Tenacity and elongation

The tenacity and elongation of a sample was determined in accordance with ASTMD 885 at a sample length of 250 mm, a tensile speed of 300 mm/min. and 20 turns/m under a standard atmosphere(20˚C, 65% relative humidity), using Instron 5565 (Instron Co., Ltd, USA).

(3) Density

The density (p) of a sample was determined using a xylene/carbon tetrachloride density gradient column at 23˚C. The gradient column was prepared and calibrated according to ASTM D 1505 at a density range of 1.34 to 1.41 g/cm$^3$.

(4) Shrinkage

A sample was kept under a standard atmosphere (20˚C, 65% relative humidity) for 24 hours and then its length **[0059]** ($L_0$) at 0.1 g/d load was measured. Alternatively, a sample was kept in a dry oven of 150˚C under a non-tension condition for 30 minutes and left outdoors for 4 hours, and then its length(L) at 0.1 g/d load was measured. Shrinkage (%) was calculated form the following formula:

$$\Delta S = (L_0 - L)/L_0 \times 100 \quad ------(3)$$

(5) Elongation at Specific Load

As an elongation at specific load, the elongation at 4.5 g/d load was measured on the S-S tenacity and elongation curve for and original yarn sample, and the elongation at 2.25 g/d load, for a treated cord sample.

(6) Dimensional Stability

The dimensional stability(%) of a treated cord, which is related to the tire sidewall indentations(SWI) and tire handling properties, is determined by the modulus at a given shrinkage, and the sum $E_{2.25}$(elongation at 2.25 g/d load) + FS(free shrinkage) is a good indicator of the dimensional stability for a treated cord processed under a particular heat-treatment condition, and the lower the sum, the better the dimensional stability.

(7) Birefringence

The birefringence of a sample was determined using a polarizing light microscope equipped with a Berek compensator.

(8) Melting Point

A sample was powdered, and 2 mg of the sample powder was put in a pan and sealed. Then, the sample was heated at a rate of 20˚C per 1 minute from room temperature to 290˚C using Perkin-Elmer DSC under a nitrogen atmosphere and the temperature at the maximum heat-absorption peak was set as the melting point.

(9) Fatigue resistance

Samples were subjected a fatigue test using a Goodrich disc fatigue tester which is conventionally used for the fatigue test tire cords. Then, they were measured for residual tenacity, and fatigue resistances were compared. The fatigue test was conducted under the following conditions: 120 ˚C, 2,500 rpm, and 10% compression. After the fatigue test, the samples were dipped in tetrachloroethylene solution to swell rubber, and then, a cord was separated from the rubber and measured for residual tenacity. This residual tenacity was measured using a conventional tensile strength tester by the above-described measurement method (2), after drying at 107 ˚C for 2 hours.

(10) Adhesion

In order to measure initial adhesion to the rubber of a dipped hybrid cord, a H-test was carried out. In the H-test, a both ends of the dipped cord were impregnated into 9.5 mm rubber lumps, the interval between the rubber lumps was maintained at 9 mm, and the rubber lumps were pulled while measuring the maximum load at which the separation of the cord from the rubber occurs, thereby evaluating adhesion. Before evaluating the adhesion, samples were vulcanized at 160 ˚C for 20 minutes under a pressure 25 kg/cm$^2$ to impart sufficient strength to the rubber. The rubber used in the test had the following composition: 100 parts of natural rubber, 3 parts of zinc oxide, 28.9 parts of carbon black, 2 parts of stearic acid, 7.0 parts of pine tar, 1.25 parts of MBTS, 3 parts of sulfur, 0.15 parts of diphenyl guanidine, and 1.0 part of phenyl-beta-naphthylamine.

EXAMPLE 1

Solid state polymerization was conducted to produce a polyethylene naphthalate chip having a manganese content of 40 ppm, an antimony content of 220 ppm, an intrinsic viscosity (I.V.) of 0.95, a manganese/phosphorus content ratio of 1.8, and a moisture content of 20 ppm. The produced chip was melt-spun by passing it through an extender at 305 ˚C at a discharge rate of 620 g/min and a spinning draft ratio of 40. At this time, the polymer being melt-spun was mixed uniformly in a polymer transporting pipe using a static mixer composed of three units. Then, the spun yarn was solidified by passing successively it through a 40 cm-long heating zone of a 370 ˚C atmosphere temperature located just below the nozzles, and a 500 mm-long cooling zone in which a cooling air of 20 ˚C was blown at a rate of 0.5 m/sec. The solidified yarn was oiled and withdrawn at a rate of 570 m/min to form an undrawn yarn, which was predrawn to the extent of 2%, and then, drawn in two stages. The first stage drawing was performed at a draw ratio of 6.0 at 168 ˚C, and the second stage drawing, at a draw ratio of 1.1 at 173 ˚C. Then, the drawn yarn was heat-set at 230 ˚C, relaxed to 2% and wound to form a 1,500 denier final drawn yarn.
Two strands of the drawn yarn thus obtained was plied and cabled to 390 turns/m to produce a cord yarn. The cord yarn was dipped with an adhesive solution (PCR resin + RFL) in a dipping tank, dried and stretched at 170 ˚C for 150 seconds at a stretch ratio of 4.0% in a dry zone, heat-set and stretched at 220 ˚C for 150 seconds in a hot stretching zone, dipped in RFL, dried at a temperature of 170 ˚C for 100 seconds, and then, heat-set at 225 ˚C for 40 seconds at a stretch ratio of -2%, to give a treated cord.
The properties of the drawn yarn and the treated cord thus obtained were measured and the results are given in Table 2.

EXAMPLE 2~4 and COMPARATIVE EXAMPLE 1~4

Various drawn yarns and treated cords were produced in the same manner as in Example 1 except that the intrinsic viscosity of the chip, manganese/phosphorus content ratio, spinning temperature, length or temperature of the heating zone, or birefringence of the undrawn yarn was changed as given in Table 1.
The properties of the drawn yarn and the treated cord thus obtained were measured and the results are given in Table 2.

TABLE 1

| Item | Chip I. V. | Mn/P Wt: ratio | Spin. temp. (˚C) | Fineness | Heating zone | | Undrawn yarn | | |
| | | | | | Length (cm) | Temp. (˚C) | Birefringence | Elongation at initial load of 0.3g/d(%) | Elongation at load of 0.5g/d after 25% of elongation |
| --- | --- | --- | --- | --- | --- | --- | --- | --- | --- |
| Ex.1 | 0.93 | 1.8 | 316 | 6.0 | 40 | 370 | 0.007 | 5.0 | 220 |
| Ex.2 | 0.93 | 1.7 | 315 | 6.0 | 30 | 370 | 0.008 | 6.1 | 230 |
| Ex.3 | 0.93 | 1.7 | 315 | 6.0 | 30 | 390 | 0.010 | 7.2 | 235 |
| Ex.4 | 0.93 | 1.7 | 315 | 6.0 | 45 | 390 | 0.008 | 6.7 | 237 |
| Comp. Ex. 1 | 0.91 | 1.7 | 315 | 6.0 | 45 | 310 | 0.012 | 11.2 | 187 |
| Comp. Ex. 2 | 1.02 | 1.7 | 320 | 6.0 | 45 | 370 | 0.015 | 11.5 | 178 |

(continued)

| Item | Chip I. V. | Mn/P Wt: ratio | Spin. temp. (°C) | Fineness | Heating zone | | Undrawn yarn | | |
|---|---|---|---|---|---|---|---|---|---|
| | | | | | Length (cm) | Temp. (°C) | Birefringence | Elongation at initial load of 0.3g/d(%) | Elongation at load of 0.5g/d after 25% of elongation |
| Comp. Ex. 3 | 0.93 | 1.7 | 315 | 6.0 | 60 | 410 | 0.005 | 12.6 | 176 |
| Comp. Ex. 4 | 0.93 | 2.1 | 315 | 6.0 | 45 | 410 | 0.008 | 13.1 | 161 |

TABLE 2

| Item | Drawn yarn | | | | | | | Treated cord | | | | | | Remark |
|---|---|---|---|---|---|---|---|---|---|---|---|---|---|---|
| | I.V. | Birefringence | Density | Tenacity (g/d) | Mid-elong. (%) | Elong. (%) | Shrinkage (%) | Tenacity (g/d) | Mid-Elong. (%) | Shrinkage (%) | E2.25 +FS (%) | Fatigue resistance (%) | Adhesion With rubber (kg) | |
| Ex.1 | 0.78 | 0.452 | 1.360 | 9.7 | 3.0 | 9.5 | 1.9 | 7.1 | 2.3 | 2.0 | 4.3 | 93 | 13.4 | |
| Ex.2 | 0.77 | 0.453 | 1.357 | 9.6 | 2.8 | 9.5 | 2.2 | 6.8 | 2.2 | 12.2 | 4.4 | 92 | 14.4 | |
| Ex.3 | 0.77 | 0.454 | 1.360 | 9.7 | 2.7 | 9.5 | 2.2 | 6.9 | 2.2 | 2.3 | 4.5 | 94 | 13.9 | |
| Ex.4 | 0.77 | 0.454 | 1.363 | 10.0 | 2.9 | 9.5 | 2.2 | 7.1 | 2.2 | 2.2 | 4.4 | 94 | 13.9 | |
| Comp Ex. 1 | 0.74 | 0.444 | 1.357 | 8.3 | 2.9 | 9.1 | 2.1 | 6.0 | 2.2 | 2.2 | 4.4 | 79 | 10.7 | |
| Comp Ex. 2 | 0.81 | 0.455 | 1.365 | 9.2 | 3.2 | 8.8 | 2.2 | | | | | | | ▰ |
| Comp. Ex. 3 | 0.77 | 0.450 | 1.360 | 9.3 | 2.9 | 9.5 | 2.2 | 6.6 | 2.2 | 2.2 | 4.4 | 77 | 10.3 | |
| Comp Ex. 4 | 0.75 | 0.446 | 1.360 | 8.4 | 3.0 | 9.3 | 2.1 | 6.2 | 2.2 | 2.2 | 4.4 | 74 | 11.7 | ■ |
| ■ : Poor appearance, ▰ : Very poor appearance and it was impossible to prepare treated cord | | | | | | | | | | | | | | |

EXAMPLE 5

In this example, a radial tire was manufactured using the dipped polyethylene naphthalate cord produced by Example 4. This radial tire had a carcass layer which has a ply turn-up extending radially outward therefrom and comprises one or two layers of the dipped polyethylene naphthalate cord produced by Example 4. This carcass cord had a specification give in Table 3 below, and was oriented at an angle of 90 ˚ with respect to the circumferential direction of the tire. The ply turn-up 14 had a height of 40-80% relative to the maximum section height of the tire. The bead portion 15 had the bead core 16 made of a high strength steel wire with a 0.95-1.00 mm diameter in a 4x4 configuration, and the bead filler 17 with a shore A hardness of more than 40. The upper portion of the belt 18 was reinforced with a belt-reinforcing layer consisting of one layer of the cap ply 19 and one layer of the edge ply 24. A cap ply cord in the cap ply 19 was disposed parallel to the circumferential direction of the tire.

TABLE 3

| | | Ex. 5 | Comp. Ex. 5 | Comp. Ex. 6 |
|---|---|---|---|---|
| Carcass | Material | PEN | PET | Rayon |
| | Specification (d/twist yarn) | 1500d/2 | 1500d/2 | 1650d/3 |
| | EPI(ends/in) | 24 | 25 | 25 |
| | Strength(kg) | 23 | 22 | 26 |
| | Elastic coefficient(g/d) | 90 | 75 | 60 |
| Cap ply | Material | Nylon | Nylon | Nylon |
| | Specification (d/twist yarn) | 1260d/2 | 1260d/2 | 1260d/2 |
| | Strength(kg) | 24 | 24 | 35 |
| | Elastic coefficient(g/d) | 30 | 30 | 30 |
| Tire | Aspect ratio | 0.60 | 0.60 | 0.60 |
| | Number of car cass layers | 1 | 1 | 1 |
| | Number of cap ply layers | 1 | 1 | 1 |

COMPARATIVE EXAMPLE 5~6

Tire was produced in the same manner as in Example 5 except that material and specification of cord for tire was changed as given in Table 3.

235/45 R17 Y tires manufactured in Example 5 and Comparative Examples 5 and 6 were mounted on 2000 cc cars and ran at 60 km/h, while noise occurring in the cars was measured and noise in the audio frequency range was expressed in dB. Handling stability and ride comfort were rated at intervals of 5 points of 100 by skilled drivers after running a predetermined course, and the results are given in Table 4 below. Furthermore, the endurance of the tires was measured according to a P-metric tire endurance test by running the tires at 38 ± 3 ˚C, and 85%, 90% and 100% of a load marked on tires, and a speed of 80 km/h, for 34 hours. In this endurance measurement, if bead separation, cord cutting, belt separation and the like could not found in any of portions, including treads, sidewalls, carcass cords, inner liners, and beads, etc., the tire was evaluated as "OK"

TABLE 4

| Item | Ex. 5 | Comp. Ex. 5 | Comp. Ex. 6 |
|---|---|---|---|
| Weight of tire(kg) | 9.85 | 9.98 | 10.12 |
| Ride comfort | 100 | 90 | 95 |
| Handling stability | 100 | 95 | 95 |
| Endurance | OK | OK | OK |
| Uniformity | 100 | 95 | 97 |
| Noise(dB) | 61.4 | 64.5 | 63.2 |

From the test results in Table 4, it can be found that the inventive tire (Example 5) has a lower weight than the tires of Comparative Examples 5 and 6 having a PET or rayon cord at their carcass, such that its rotation resistance can be reduced. Moreover, it can be found that the inventive tire whose carcass comprises the PEN cord produced by the present invention has excellent ride comfort and handling stability, reduced noise, and improved uniformity.

**Industrial Applicability**

The present invention allows the production of the high strength polyethylene naphthalate fiber by controlling the stress-strain curve and fine structure of the undrawn yarn and thus improving the drawability of the undrawn yarn in the drawing step. The treated cord produced using this fiber has improved dimensional stability and high strength, such that it can be advantageously employed as a fibrous reinforcement material of rubber products such as tires and industrial belts, and other industrial applications.

According to the present invention, the high strength PEN cord of the present invention is applied in a carcass layer of high performance radial tires, and thus, satisfactory results with respect to the endurance, ride comfort and handling stability of tires can be obtained.

In addition, according to the present invention, the high strength PEN fiber is applied, making it possible to reduce the weight of tires.

While the present invention have been described in detail with respect to the preferred embodiment, it is obvious to a person skilled in the art that various changes and modifications can be made therein without departing from the spirit and scope of the present invention, and such changes and modifications should be limited only by the scope of the appended claims.

**Claims**

1. A polyethylene naphthalate yarn produced by a method comprising the steps of:

   (A) extruding a polymer at a temperature of 290-330 ˚C to form a molten spun yarn, the polymer containing more than 85 mol% of <u>ethylene-2,6-naphthalate</u> units and having an intrinsic viscosity of 0.80-1.2;

   (B) passing the molten spun yarn through a retarded cooling zone and then quenching and solidifying the spun yarn;

   (C) withdrawing the solidified yarn in such a speed that the undrawn yarn has a birefringence of 0.001-0.015 and shows a stress-strain curve wherein the yarn is elongated by less than 10% and has an initial modulus of 10-50 g/d, when subjected to an initial stress of 0.3 g/d, and it is elongated by at least 200% when subjected to a stress greater than the initial stress but smaller than 1.0 g/d; and

   (D) subjecting the withdrawn yarn to multi-stage drawing to a total draw ratio of at least 4.0; and wherein the polyethylene naphthalate yarn having some properties of (1) an intrinsic viscosity of 0.6 to 0.9, (2) a tenacity of at least 8.5 g/d, (3) and elongation of at least 6%, (4) a birefringence of at least 0.35, (5) a density of 1.355 to 1.375, and (6) a shrinkage of 1 to 4%.

2. The polyethylene naphthalate yarn of Claim 1, wherein the polymer used in the step (A) is a solid state-polymerized polyethylene-2,6-naphthalate chip having 30-70 ppm of manganese metal and 150-300 ppm of antimony metal.

3. The polyethylene naphthalate yarn of claim 1, wherein the chip further comprises a phosphorus component in such an amount that the manganese/phosphorus weight ratio is 2.0 or below.

4. The polyethylene naphthalate yarn of claim 1, wherein the solidification zone in step (B) comprises a heating zone having a length of 200 to 700 mm and maintained at a temperature of 300 to 400 ˚C, and a cooling zone disposed just below the heating zone.

5. A treated cord prepared by plying and cabling 2 strands of the polyethylene naphthalate yarn of claim 1, followed by a resorcinol-formaline-latex treatment; said cord having (1) a dimensional stability index represented by the sum of $E_{2.25}$(elongation at 2.25 g/d load) and FS(free shrinkage) of 5.5% or below, and (2) a tenacity of at least 6.5 g/d.

6. A pneumatic radial tire having an aspect ratio of less than 0.65, which comprises a pair of parallel bead cores, at least one radial carcass ply wound around the bead cores, a belt layer formed on the outer circumferential side of the carcass ply, a belt-reinforcing circumferential layer formed on the outer circumferential side of the belt layer, in which the carcass ply comprising a dipped cord produced using a polyethylene naphthalate yarn of claim 1, the dipped cord being **characterized by** having the following physical properties and showing a stress-strain curve wherein the cord is elongated by less than 2% and has an initial modulus of 50-250 g/d, when subjected to an initial stress of 1.0 g/d, and it is elongated by at most 15% when subjected to a stress greater than the initial stress but smaller than 6.0 g/d: (1) a tenacity of at least 6.5 g/d, (2) an elongation of at least 6%, (3) an adhesion with rubber of at least 10 kg, (4) a fatigue resistance of at least 90%, and (5) 2,000-8,000 deniers.

7. The pneumatic radial tire of Claim 6, wherein the carcass ply is formed in one or two layers.

8. The pneumatic radial tire of Claim 6, wherein the reinforcement density of the dipped cord in the carcass ply is 15-35 EPI.

9. The pneumatic radial tire of Claim 6, wherein the dipped cord has a twist number of 250-500 TPM.

10. Rubber products incorporating the treated cord of Claim 5 as a reinforcement material.


**Patentansprüche**

1. Polyethylennaphthalat-Garn, hergestellt durch ein Verfahren, welches die folgenden Schritte umfasst:

    (A) Extrudieren eines Polymers bei einer Temperatur von 290-330˚C, um ein schmelzgesponnenes Garn zu bilden, wobei das Polymer mehr als 85 Mol% Ethylen-2,6-naphthalat-Einheiten enthält und eine intrinsische Viskosität von 0,80-1,2 aufweist;
    (B) Durchführen des schmelzgesponnenen Garns durch eine Zone mit einer verzögerten Kühlung und dann Abschrecken und Verfestigen des gesponnenen Garns;
    (C) Wegziehen des verfestigten Garns mit einer solchen Geschwindigkeit, dass das ungezogene Garn eine Doppelbrechung von 0,001-0,015 hat und eine Belastung-Dehnung-Kurve zeigt, bei der das Garn um weniger als 10 % gedehnt wird und ein Anfangsmodul von 10-50 g/d aufweist, wenn es einer Anfangsbelastung von 0,3 g/d unterworfen wird, und um mindestens 200 % gedehnt wird, wenn es einer größeren Belastung als der Anfangsbelastung, jedoch kleiner als 1,0 g/d, unterworfen wird; und
    (D) Unterwerfen des weggezogenen Garns einem mehrstufigen Ziehen mit einem Gesamtzugverhältnis von mindestens 4,0; und wobei das Polyethylennaphthalat-Garn einige Eigenschaften hat von (1) einer intrinsischen Viskosität von 0,6 bis 0,9, (2) einer Zähigkeit von mindestens 8,5 g/d, (3) einer Bruchdehnung von mindestens 6 %, (4) einer Doppelbrechung von mindestens 0,35, (5) einer Dichte von 1,355 bis 1,375, und (6) einer Schrumpfung von 1 bis 4 %.

2. Polyethylennaphthalat-Garn nach Anspruch 1, wobei das im Schritt (A) verwendete Polymer ein festphasenpolymerisierter Polyethylen-2,6-naphthalat-Chip mit 30-70 ppm Manganmetall und 150-300 ppm Antimonmetall ist.

3. Polyethylennaphthalat-Garn nach Anspruch 1, wobei der Chip ferner eine Phosphorkomponente in einer solchen Menge umfasst, dass das Mangan/Phosphor-Gewichtsverhältnis 2,0 oder weniger beträgt.

4. Polyethylennaphthalat-Garn nach Anspruch 1, wobei die Verfestigungszone in Schritt (B) eine Heizzone umfasst, die eine Länge von 200 bis 700 mm aufweist und bei einer Temperatur von 300 bis 400˚C gehalten wird, und eine Kühlzone, die unmittelbar angrenzend an die Heizzone angeordnet ist.

5. Behandelter Cord, der hergestellt ist durch Übereinanderlegen und Verdrillen von zwei Strängen des Polyethylennaphthalat-Garns nach Anspruch 1, gefolgt von einer Resorcin-Formalin-Latex-Behandlung, wobei der Cord aufweist: (1) einen Dimensionsstabilitätsindex, der durch die Summe von $E_{2,25}$ (Dehnung bei 2,25 g/d Last) und FS (freie Schrumpfung) von 5,5 % oder weniger repräsentiert wird, und (2) eine Zähigkeit von mindestens 6,5 g/d.

6. Luftgürtelreifen mit einem Querschnittsverhältnis von weniger als 0,65, der umfasst: ein Paar von parallelen Wulstkernen, mindestens eine radiale Karkassenlage, die um die Wulstkerne herumgewunden ist, eine Gürtellage, die auf der äußeren Umfangseite der Karkassenlage gebildet ist, eine im Umfangsrichtung verlaufende gürtelverstärkende Lage, die auf der äußeren Umfangsseite der Gürtellage gebildet ist, wobei die Karkassenlage einen imprägnierten Cord aufweist, der unter Verwendung eines Polyethylennaphthalat-Garns nach Anspruch 1 gebildet ist, wobei der imprägnierte Cord **dadurch gekennzeichnet ist, dass** er eine Belastung-Dehnung-Kurve zeigt, bei welcher der Cord um weniger als 2 % gedehnt wird und einen Anfangsmodul von 50-250 g/d aufweist, wenn er einer Anfangsbelastung von 1,0 g/d unterworfen wird, und um höchstens 15 % gedehnt wird, wenn er einer größeren Belastung als der Anfangsbelastung, jedoch kleiner als 6,0 g/d, unterworfen wird, und dadurch dass er die folgenden physikalischen Eigenschaften aufweist: (1) eine Zähigkeit von mindestens 6,5 g/d, (2) eine Bruchdehnung von mindestens 6 %, (3) eine Adhäsion mit Gummi/Kautschuk von mindestens 10 kg, (4) eine Ermüdungsbeständigkeit von mindestens 90 % und (5) 2.000-8.000 Denier.

**7.** Luftgürtelreifen nach Anspruch 6, wobei die Karkassenlage in einer Schicht oder zwei Schichten geformt ist.

**8.** Luftgürtelreifen nach Anspruch 6, wobei die Verstärkungsdichte des imprägnierten Cords in der Karkassenlage 15-35 EPI beträgt.

**9.** Luftgürtelreifen nach Anspruch 6, wobei der imprägnierte Cord eine Verdrehungszahl von 260-500 TPM hat.

**10.** Kautschuk/Gummiprodukte, welche den imprägnierten Cord nach Anspruch 5 als Verstärkungsmaterial umfassen.


**Revendications**

**1.** Fil de polyéthylène naphtalate produit par un procédé comprenant les étapes consistant à :

(A) extruder un polymère à une température de 290 à 330 ˚C pour former un filé fondu, le polymère contenant plus de 85 % molaire d'unités d'éthylène-2,6-naphtalate et ayant une viscosité intrinsèque de 0,80 à 1,2 ;
(B) faire passer le filé fondu à travers une zone à refroidissement retardé et ensuite refroidir rapidement et solidifier le filé ;
(C) retirer le fil solidifié à une vitesse telle que le fil non étiré présente une biréfringence de 0,001 à 0,015 et montre une courbe de contrainte-déformation dans laquelle le fil est allongé de moins de 10 % et présente un module initial de 10 à 50 g/d, lorsqu'il est soumis à une contrainte initiale de 0,3 g/d, et il est allongé d'au moins 200 % lorsqu'il est soumis à une contrainte supérieure à la contrainte initiale mais inférieure à 1,0 g/d ; et
(D) soumettre le fil retiré à un tirage en plusieurs stades jusqu'à un rapport d'étirage total d'au moins 4,0 ; et dans lequel le fil de polyéthylène naphtalate présente certaines propriétés parmi (1) une viscosité intrinsèque de 0,6 à 0,9, (2) une ténacité d'au moins 8,5 g/d, (3) et une élongation d'au moins 6 %, (4) une biréfringence d'au moins 0,35, (5) une densité de 1,355 à 1,375 et (6) un retrait de 1 à 4 %.

**2.** Fil de polyéthylène naphtalate selon la revendication 1, dans lequel le polymère utilisé à l'étape (A) est un granule de polyéthylène-2,6-naphtalate polymérisé à l'état solide comportant de 30 à 70 ppm de métal de manganèse et de 150 à 300 ppm de métal d'antimoine.

**3.** Fil de polyéthylène naphtalate selon la revendication 1, dans lequel le granule comprend en outre un composant de phosphore en une quantité telle que le rapport de poids manganèse / phosphore est de 2,0 ou moins.

**4.** Fil de polyéthylène naphtalate selon la revendication 1, dans lequel la zone de solidification à l'étape (B) comprend une zone de chauffage ayant une longueur de 200 à 700 mm et étant maintenue à une température de 300 à 400 ˚C, et une zone de refroidissement disposée juste au-dessous de la zone de chauffage.

**5.** Fil câblé traité, préparé en retordant et câblant 2 des torons du fil de polyéthylène naphtalate selon la revendication 1, suivi d'un traitement de résorcine-formaline-latex ; ledit fil câblé présentant (1) un indice de stabilité dimensionnelle représenté par la somme de $E_{2,25}$ (élongation sous une charge de 2,25 g/d) et d'un FS (retrait libre) de 5,5 % ou moins, et (2) une ténacité d'au moins 6,5 g/d.

**6.** Bandage radial pneumatique, ayant un rapport de cotés de moins de 0,65, qui comprend une paire de tringles de talon parallèles, au moins un pli de carcasse radiale enroulé autour des tringles de talon, une couche de courroie formée sur le côté circonférentiel extérieur du pli de carcasse, une couche circonférentielle de renforcement de courroie formée sur le côté circonférentiel extérieur de la couche de courroie, dans lequel le pli de carcasse comprend un fil câblé imprégné produit en utilisant un fil de polyéthylène naphtalate selon la revendication 1, le fil câblé imprégné étant **caractérisé en ce qu'**il présente les propriétés physiques suivantes et montre une courbe de contrainte-déformation dans laquelle le fil câblé est allongé de moins de 2 % et présente un module initial de 50 à 250 g/d, lorsqu'il est soumis à une contrainte initiale de 1,0 g/d, et il est allongé d'un maximum de 15 % lorsqu'il est soumis à une contrainte supérieure à la contrainte initiale mais inférieure à 6,0 g/d : (1) une ténacité d'au moins 6,5 g/d, (2) une élongation d'au moins 6 %, (3) une adhérence au caoutchouc d'au moins 10 kg, (4) une résistance à la fatigue d'au moins 90 %, et (5), 2000 à 8000 deniers.

7. Bandage radial pneumatique selon la revendication 6, dans lequel le pli de carcasse est formé en une ou deux couches.

8. Bandage radial pneumatique selon la revendication 6, dans lequel la densité de renforcement du fil câblé imprégné dans le pli de carcasse est de 15 à 35 EPI.

9. Bandage radial pneumatique selon la revendication 6, dans lequel le fil câblé imprégné présente un coefficient de torsion de 250 à 500 TPM.

10. Produits en caoutchouc intégrant le fil câblé traité selon la revendication 5 comme matériau de renforcement.

FIG.1

FIG.2

FIG.3

**EP 1 510 604 B1**

**REFERENCES CITED IN THE DESCRIPTION**

**Patent documents cited in the description**

- JP SHO7235318 B
- JP 48064222 A
- JP 50016739 A
- JP 2945130 B